# EUROPEAN PATENT APPLICATION

(11) **EP 2 894 499 A1**
(43) Date of publication of application: **15.07.2015**
(21) Application number: 13834833.9
(22) Date of filing: 30.08.2013
(51) Int. Cl.: G02B 6/13

(54) **METHOD FOR MANUFACTURING POLYMER OPTICAL WAVEGUIDE**

(30) Priority: 07.09.2012 JP 2012197137
(71) Applicant: Nitto Denko Corporation, Ibaraki-shi, Osaka 567-8680 (JP)
(72) Inventor: KONTANI, Tomohiro, Ibaraki-shi Osaka 567-8680 (JP)
(74) Representative: Alt, Michael
(86) International application number: PCT/JP2013/073248
(87) International publication number: WO 2014/038474

(57) **Abstract**

There is provided provide a manufacturing method for a polymer optical waveguide, which allows a wide choice of materials, is improved in reproducibility of processing and in yield, and is inexpensive. A manufacturing method for a polymer optical waveguide according to an embodiment of the present invention includes: arranging a curable composition for core formation on a surface of a mold having a recess corresponding to a core shape; attaching a transfer film onto the surface of the mold while pressing the transfer film in a predetermined direction to fill the recess with the curable composition for core formation and to remove an excess of the curable composition for core formation; curing the curable composition for core formation to form a core; peeling the transfer film from the mold to transfer the core onto the transfer film; and forming a first cladding so as to cover the core on the transfer film.

## Description

### Technical Field

The present invention relates to a manufacturing method for a polymer optical waveguide.

### Background Art

In optical information transmission in recent years, polymer optical waveguides such as an optical diffractive waveguide, an optical demultiplexing waveguide, an optical multiplexing waveguide, an optical switch, and an optical circuit have been used to transmit optical information. Such polymer optical waveguides have been applied to applications such as sensors.

The hitherto known polymer optical waveguide includes: a core formed of a transparent synthetic resin; and a cladding formed of a transparent synthetic resin having a lower refractive index than the resin for forming the core, the cladding covering a periphery of the core so as to surround the core. Such polymer optical waveguide is mainly manufactured by forming the core so as to have a desired pattern shape through the use of a photolithography process and a reactive ion etching (RIE) process, and then forming the cladding (for example, FIGS. **1** of Patent Literature 1). However, when such method is to be applied, it is necessary to select a material that can be patterned. Accordingly, choice of materials is limited, resulting in a problem in that it is difficult to achieve compatibility between patterning property and optical properties. In addition, when a polymer optical waveguide having a core having a large diameter is manufactured by etching, there is a problem in that a low processing speed and an increased number of steps increase a manufacturing cost and make it difficult to promote mass production.

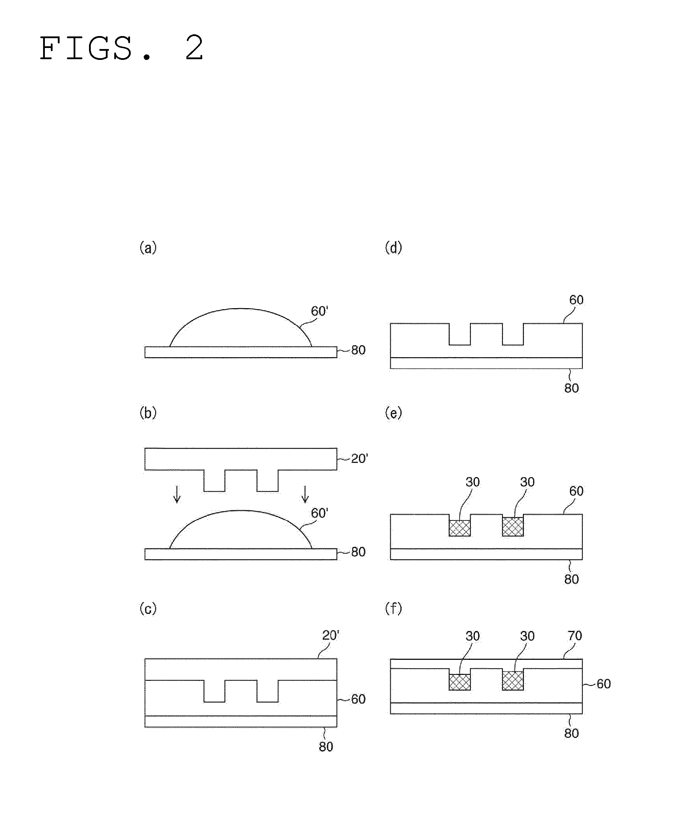

To address such problems, there is a proposal of a manufacturing method involving: forming a recess corresponding to a core shape in a cladding by press molding using a mold having a protrusion corresponding to the core shape; and burying a resin for core formation into the recess (for example, Patent Literatures 2 and 3). In such manufacturing method, for example, as illustrated in FIGS. **2(a)** to **2(f)**, a resin **60'** for first cladding formation is arranged on a substrate **80** (FIG. **2(a)**), and the resin **60'** for first cladding formation is cured while a mold **20'** having a protrusion corresponding to a core shape is pressed thereinto (FIGS. **2 (b)** and **2(c)**)**.** Thus, a first cladding **60** having a recess corresponding to the core shape is formed (FIG. **2(d)**). Then, the recess is filled with a resin for core formation, followed by curing to form a core **30** (FIG. **2(e)**), and a second cladding **70** is formed thereon (FIG. **2(f)**) (Patent Literature 2). According to such manufacturing method, the polymer optical waveguide can be manufactured at a low cost. However, it is difficult to fill a fine core pattern with the resin for core formation without any excess or deficiency, and hence there may arise problems such as: occurrence of a variation in thickness of the core; and a residue of the resin for core formation remaining on the cladding.

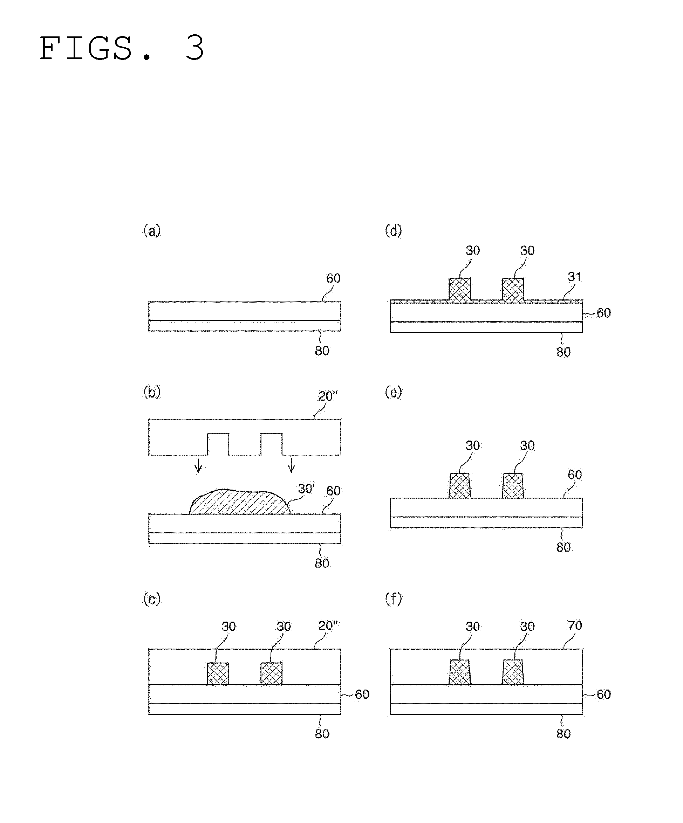

In addition, as another manufacturing method, there is a proposal of a manufacturing method involving forming a core by press molding using a mold having a recess corresponding to a core shape (for example, Patent Literature 4). In the manufacturing method involving using a mold having a recess corresponding to a core shape, for example, as illustrated in FIGS. **3(a)** to **3(f)****,** the first cladding **60** is formed on the substrate **80** (FIG. **3(a)**)**,** and a resin **30'** for core formation is arranged on the first cladding **60** and cured while a mold **20"** having a recess corresponding to a core shape is pressed thereinto (FIGS. 3 **(b)** and **3(c)**). Then, the mold **20"** is peeled off to form the core **30** (FIG. **3(d)**)**,** and the second cladding **70** is formed thereon (FIG. **3 (f)**). However, according to such manufacturing method, as illustrated in FIG. **3 (d)**, a residual film (burr) **31** of the resin for core formation is generated in some cases. In such cases, a step of removing the residual film (burr) **31** (FIG. **3(e)**) is required before formation of the second cladding. The removing step is generally carried out by etching, which, however, may deform a shape of the core itself, or may not sufficiently remove the residual film. In addition, as in the above-mentioned method, there is a problem in that an increase in manufacturing cost is caused and mass production is difficult to be promoted.

### Citation List

### Patent Literature

[PTL 1] JP 2006-23661 A
[PTL 2] JP 2007-316094 A
[PTL 3] JP 2005-316018 A
[PTL 4] JP 2-131202 A

### Summary of Invention

### Technical Problem

The present invention has been made in order to solve the above-mentioned problems, and an object of the present invention is to provide a manufacturing method for a polymer optical waveguide, which allows a wide choice of materials, is improved in reproducibility of processing and in yield, and is inexpensive.

### Solution to Problem

A manufacturing method for a polymer optical waveguide according to an embodiment of the present invention includes: arranging a curable composition for core formation on a surface of a mold having a recess corresponding to a core shape; attaching a transfer film onto the surface of the mold while pressing the transfer film in a predetermined direction to fill the recess with the curable composition for core formation and to remove an excess of the curable composition for core formation; curing the curable composition for core formation to form a core; peeling the transfer film from the mold to transfer the core onto the transfer film; and forming a first cladding so as to cover the core on the transfer film.

In one embodiment of the present invention, the curable composition for core formation has a fluorine content of 1 wt% or more.

In one embodiment of the present invention, the curable composition for core formation includes a UV-curable composition.

In one embodiment of the present invention, the curable composition for core formation includes an acrylic UV-curable composition or an epoxy-based UV-curable composition.

In one embodiment of the present invention, the transfer film contains at least one polymer selected from an olef in-based polymer, a cycloolefin-based polymer, a styrene-based polymer, a polycarbonate-based polymer, an ester-based polymer, an acrylic polymer, an ether-based polymer, a polyimide-based polymer, and a polyamide-based polymer.

In one embodiment of the present invention, the transfer film contains at least one polymer selected from polypropylene, polystyrene, polyethylene terephthalate, a polycarbonate-based polymer, a cycloolefin-based polymer, and a polyimide-based polymer.

In one embodiment of the present invention, a surface of the transfer film on a side to be attached onto the mold has been subjected to modification treatment.

In one embodiment of the present invention, the manufacturing method for a polymer optical waveguide further includes, after the forming of the first cladding, peeling the transfer film off.

In one embodiment of the present invention, the manufacturing method for a polymer optical waveguide further includes forming a second cladding on surfaces of the first cladding and the core from which the transfer film has been peeled.

### Advantageous Effects of Invention

According to one embodiment of the present invention, the manufacturing method for a polymer optical waveguide, which allows a wide choice of materials, is improved in reproducibility of processing and in yield, and is inexpensive is provided.

### Brief Description of Drawings

FIGS. **1(a)** to **1(g)** are schematic views illustrating a manufacturing method for a polymer optical waveguide according to an embodiment of the present invention.
FIGS. 2**(a)** to **2(f)** are schematic views illustrating a related-art manufacturing method for a polymer optical waveguide.
FIGS. **3(a)** to **3(f)** are schematic views illustrating another related-art manufacturing method for a polymer optical waveguide.

### Description of Embodiments

A manufacturing method for a polymer optical waveguide according to an embodiment of the present invention includes:
[Step 1] arranging a curable composition for core formation on a surface of a mold having a recess corresponding to a core shape;
[Step 2] attaching a transfer film onto the surface of the mold while pressing the transfer film in a predetermined direction to fill the recess with the curable composition for core formation and to remove an excess of the curable composition for core formation;
[Step 3] curing the curable composition for core formation to form a core;
[Step 4] peeling the transfer film from the mold to transfer the core onto the transfer film; and
[Step 5] forming a first cladding so as to cover the core on the transfer film. The manufacturing method for a polymer optical waveguide according to an embodiment of the present invention may further include the below-indicated steps [6] and [7] as required:
[Step 6] after the forming of the first cladding, peeling the transfer film off; and
[Step 7] forming a second cladding on surfaces of the first cladding and the core from which the transfer film has been peeled.

According to the manufacturing method of the present embodiment, the polymer optical waveguide can be obtained by simple operations like the step 1 to the step 5 by virtue of the use of the transfer film having a lower refractive index than the core. Further, when the transfer film is peeled off, there is obtained a buried polymer optical waveguide in which the core is exposed only at the upper surface. In addition, when the transfer film is peeled off and then the second cladding is formed on the surface from which the transfer film has been peeled, the cladding can be formed with a material different from that for the transfer film.

In addition, according to the manufacturing method of the present embodiment, the transfer film is attached onto the surface of the mold while being pressed in a predetermined direction. Accordingly, the recess of the surface of the mold can be filled with the curable composition for core formation without any excess or deficiency, and besides, an excess of the curable composition for core formation can be pushed out of the surface of the mold and removed. As a result, the core can be formed with good reproducibility without the generation of a residue or a residual film, and hence reproducibility of processing and yield can be improved. In addition, the core can be formed with a small amount of the curable composition for core formation without the need for a development step, an etching step, or the like, and hence a cost reduction can be achieved. Further, any appropriate material may be used as long as a transparent resin (resin for core formation) can be formed through its curing by light or heat, and hence there is an advantage of an extremely wide choice of materials.

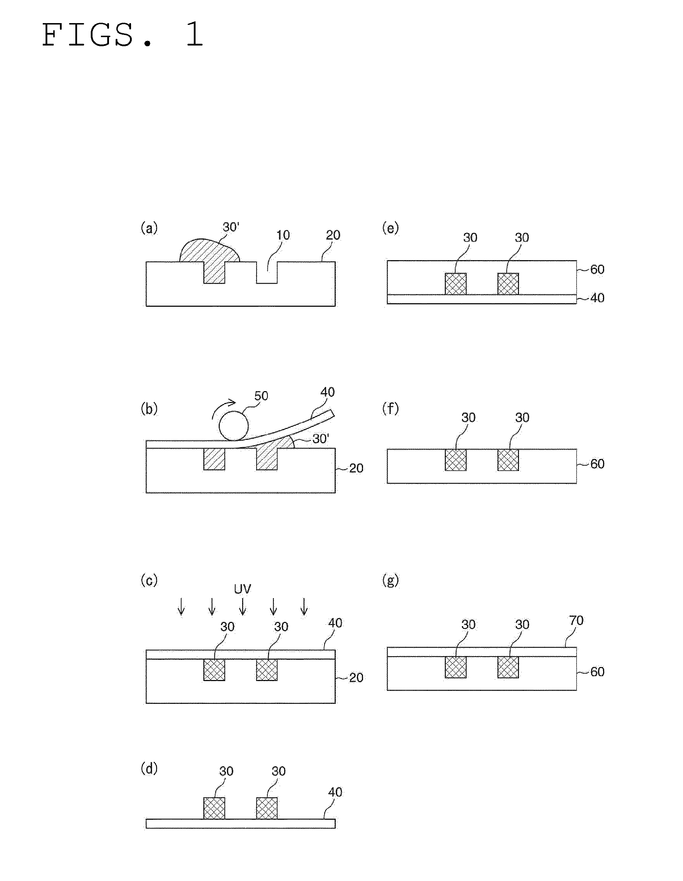

FIGS. **1(a)** to **1(g)** are schematic sectional views illustrating the manufacturing method according to an embodiment of the present invention, corresponding to the steps [1] to [7], respectively. An embodiment of the present invention is described in detail below with reference to FIGS. **1(a)** to **1(g)****.**

### [Step 1]

In the step 1, as illustrated in FIG. **1(a)****,** a curable composition **30'** for core formation is arranged on a surface of a mold **20** having a recess **10** corresponding to a core shape. A method of arranging the curable composition for core formation and a position at which the curable composition for core formation is to be arranged are not limited as long as the effects of the present invention are obtained. For example, the curable composition for core formation may be arranged on part or the entire surface of the mold by any appropriate method such as dropping or applying. The amount of the curable composition for core formation to be arranged may be appropriately set depending on, for example, the size and number of recesses.

The curable composition for core formation may be any appropriate curable composition as long as the core can be formed through its curing by UV irradiation, heating, or the like. It is preferred that the curable composition for core formation be a UV-curable composition. The curable composition for core formation typically contains an uncured resin for core formation, or a constituent monomer and/or oligomer of a resin for core formation.

It is preferred to use, as the resin for core formation, a resin having a higher refractive index than a resin for first cladding formation to be described later. The refractive index of the resin for core formation (substantially the refractive index of the core) may be appropriately set depending on purposes.

Specific examples of the resin for core formation include a fluorine-based resin, an epoxy-based resin, a polyimide-based resin, a polyamide-based resin, an acrylic resin, a polyurethane-based resin, a siloxane-based resin, and fluorine-modified products thereof (such as a fluorinated epoxy-based resin, a fluorinated polyimide-based resin, a fluorinated polyamide-based resin, a fluorinated acrylic resin, a fluorinated polyurethane-based resin, and a fluorinated siloxane-based resin). They may be used alone or in combination. Of those, a fluorine-based resin, an acrylic resin, an epoxy-based resin, and fluorine-modified products of the resins may be preferably used. Through the use of the fluorine-based resin and the fluorine-modified product, the fluorine content of the curable composition for core formation can be easily adjusted to fall within a suitable range to be described later. When the acrylic resin is used, the curing can be sufficiently performed with only light. In addition, when the epoxy-based resin is used, the curing reaction can be easily performed.

The fluorine-based resin contains as a monomer component a monomer having a fluorine atom-containing group (sometimes referred to as "fluorine-based monomer"). Any appropriate fluorine-based monomer may be used as the fluorine-based monomer. Examples thereof include tetrafluoroethylene, trifluoroethylene, chlorotrifluoroethylene, hexafluoropropylene, perfluoroalkyl vinyl ethers (such as perfluoro (methyl vinyl ether), perfluoro (ethyl vinyl ether), and perfluoro(propyl vinyl ether)), and vinylidene fluoride. They may be used alone or in combination. In addition, the fluorine-based resin may be a copolymer of a fluorine-based monomer and any appropriate other monomer.

Specific examples of the fluorine-based resin include polytetrafluoroethylene, a tetrafluoroethylene-hexafluoropropylene copolymer, a tetrafluoroethylene-ethylene copolymer, a tetrafluoroethylene-perfluoroalkyl vinyl ether copolymer, polychlorotrifluoroethylene, and polyvinylidene fluoride.

The acrylic resin contains as a monomer component any appropriate acrylic monomer, preferably a (meth) acrylic acid alkyl ester. An alkyl group of the (meth)acrylic acid alkyl ester is exemplified by preferably a C1 to 20 linear, branched, or cyclic alkyl group, more preferably a C1 to 10 linear, branched, or cyclic alkyl group. They may be used alone or in combination. In addition, the acrylic resin may further contain as a monomer component any other monomer copolymerizable with the (meth)acrylic acid alkyl ester.

Examples of the other copolymerizable monomer include: carboxyl group-containingmonomers such as acrylic acid, methacrylic acid, caryboxyethyl (meth)acrylate, caryboxypentyl (meth)acrylate, itaconic acid, maleic acid, fumaric acid, and crotonic acid; acid anhydride monomers such as maleic anhydride and itaconic anhydride; hydroxyl group-containing monomers such as 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate, and (4-hydroxymethylcyclohexyl)methyl (meth) acrylate; monomers each containing nitrogen in its side chain such as (meth)acrylamide, (meth)acrylic acid N-hydroxymethylamide, (meth)acrylic acid alkylaminoalkyl esters (such as dimethylaminoethyl methacrylate, and t-butylaminoethyl methacrylate), N-vinylpyrrolidone, acryloylmorpholine, acrylonitrile, and N,N-dimethylacrylamide; alkoxyl group-containing monomers such as methoxyethyl (meth)acrylate and ethoxyethyl (meth)acrylate; sulfonic group-containing monomers such as styrenesulfonic acid, allylsulfonic acid, 2-(meth)acrylamide-2-methylpropanesulfonic acid, (meth)acrylamidepropanesulfonic acid,sulfopropyl (meth)acrylate, and (meth)acryloyloxynaphthalenesulfonic acid; and phosphoric group-containing monomers such as 2-hydroxyethylacryloyl phosphate. They may be used alone or in combination.

The epoxy-based resin contains as a monomer component any appropriate epoxy compound. Examples of the epoxy compound include: epoxy compounds each having a fluorene structure such as bisphenoxyethanolfluorene glycidyl ether; and alicyclic epoxy compounds such as 3',4'-epoxycyclohexylmethyl-3,4-epoxycyclohexane carboxylate and (3',4'-epoxycyclohexane)methyl-3',4'-epoxycyclohexyl carboxylate. They may be used alone or in combination.

The curable composition for core formation has a fluorine content of preferably 1 wt% or more, more preferably 10 wt% or more, still more preferably 20 wt% or more. When the fluorine content falls within such range, the curable composition for core formation provides excellent releasability from the mold, and hence the transfer of the core onto the transfer film in the step 4 can be easily performed. On the other hand, the upper limit of the fluorine content is preferably 78 wt%. When the upper limit is more than 78 wt%, the core may liquefy or gasify to make it impossible to maintain its shape in some cases.

A method of adjusting the fluorine content of the curable composition for core formation to 1 wt% or more is exemplified by the use of a fluorine atom-containing resin (such as the fluorine-based resin or the fluorine-modified product) as the resin for core formation, or the addition of a fluorine compound to the curable composition for core formation. Any appropriate fluorine compound may be selected as the fluorine compound depending on, for example, purposes. Specific examples of the fluorine compound include hexafluorobenzene, pentafluorobenzene, pentafluorophenol, hexafluorobiphenyl, decafluorobiphenyl, tetrafluorobutane, hexafluorocyclododecane, perfluoropentacyclodecane, decafluorodiphenyl ether, octafluorodiphenyl ether, hexafluorodiphenyl ether, ethylenebis-tetrafluorophthalimide, tetrafluorobisphenol A, fluorinated polystyrene, fluorinated polycarbonate, a fluorinated epoxy compound, fluorinated polyphenylene oxide, polyfluorostyrene, fluorinated paraffin, and tetrafluorophthalic anhydride.

The curable composition for core formation may further contain any appropriate additive as required. Examples of the additive include a photopolymerization initiator, a cross-linking agent, and a plasticizer. The content of the additive may be appropriately set depending on, for example, purposes.

Any appropriate mold may be used as the mold as long as the mold has a recess corresponding to a desired core shape. It may be preferred to use a mold formed of any of: metals such as aluminum, nickel, copper, iron, and alloys thereof; resins such as an acrylic resin and a polycarbonate-based resin; and glass. A mold formed of any such material (in particular, a material other than the resins) can be repeatedly utilized. Accordingly, a cost reduction can be achieved, and besides, the amount of waste can be reduced.

The width of the recess may be, for example, from 2 µm to 1,000 µm. In addition, the depth of the recess may be, for example, from 2 µm to 1,000 µm. In addition, the number of recesses to be formed in the mold may be only one, or may be two or more.

### [Step 2]

In the step 2, as illustrated in FIG. **1**(**b**), a transfer film **40** is attached onto the surface of the mold **20** while being pressed in a predetermined direction. Thus, the recess **10** is filled with the curable composition **30'** for core formation, and at the same time, an excess of the curable composition **30'** for core formation is pushed out and removed. Specifically, one end portion of the transfer film **40** is brought into abutment with the surface of the mold **20** having arranged thereon the curable composition **30'** for core formation, and then, through the use of any appropriate pressing means (in the illustrated example, a roller) **50**, the transfer film **40** is attached toward the other end port ion while pressing the abutment portion from the transfer film **40** side. At this time, a speed at which the transfer film is attached and a speed at which the pressing means is moved are preferably adjusted to be substantially the same so that the pressing means **50** may be positioned on the leading end portion in the forward direction of the attachment of the mold and the transfer film onto each other. This is because a pressure to be applied is concentrated on the leading end portion in the forward direction of the attachment, and thus the excess of the curable composition for core formation and air can be suitably pushed out of a space between the mold and the transfer film. It should be noted that, in the illustrated example, the roll is rolled in a direction perpendicular to the longitudinal direction of the core, but alternatively, the roll may be rolled in a direction parallel to the longitudinal direction of the core, or in a direction that is neither perpendicular nor parallel to the longitudinal direction of the core.

The pressure to be applied to the transfer film by the pressing means is preferably 0.05 MPa or more, more preferably 0.1 MPa or more, still more preferably 0.3 MPa or more, and is, for example, 5 MPa or less. When the pressure falls within such range, the excess of the curable composition for core formation and air can be suitably pushed out.

The speed at which the pressing means is moved and the speed at which the transfer film is attached are each preferably from 1 cm/sec to 20 cm/sec, more preferably from 3 cm/sec to 10 cm/sec. When the speeds each fall within such range, the excess of the curable composition for core formation and air can be suitably pushed out.

The transfer film may be formed of any appropriate material depending on, for example, adhesiveness or peelability with respect to the resin for core formation, and applications. When the transfer film is used as a cladding, a material having a lower refractive index than the core is preferably selected. Examples of the material for forming the transfer film include: an olefin-based polymer such as polyethylene or polypropylene; a cycloolefin-based polymer such as polynorbornene; a styrene-based polymer such as polystyrene; a polycarbonate-based polymer; an ester-based polymer such as polyethylene terephthalate (PET); an acrylic polymer; an ether-based polymer; a polyimide-based polymer; and a polyamide-based polymer. Of those, polypropylene, polystyrene, PET, a polycarbonate-based polymer, a cycloolefin-based polymer, and a polyimide-based polymer are preferred. They may be used alone or in combination.

The surface of the transfer film on the side to be brought into contact with the mold is preferably subjected to modification treatment. The modification treatment can improve adhesion strength between the core to be formed in the step 3 to be described later and the transfer film. As a result, the core can be satisfactorily transferred onto the transfer film upon peeling off of the transfer film in the step 4. Examples of the modification treatment include corona treatment, flame treatment, and plasma treatment. Of those, corona treatment is preferred.

The thickness of the transfer film may be set to any appropriate thickness depending on, for example, purposes. The thickness is, for example, from 15 µm to 200 µm.

### [Step 3]

In the step 3, as illustrated in FIG. **1**(**c**), the curable composition **30'** for core formation is cured to form a core **30**. The transfer film **40** serves as a cover to hermetically enclose the curable composition for core formation, and hence its contact with oxygen in air is prevented, which allows suitable progress of its curing reaction.

Curing means is generally UV irradiation and/or heating (in the illustrated example, UV irradiation). When both the UV irradiation and the heating are performed, the UV irradiation and the heating may be simultaneously performed, or may be separately performed. UV irradiation conditions and heating conditions may each be appropriately set depending on, for example, the components of the curable composition for core formation and the concentrations of the components.

### [Step 4]

In the step 4, as illustrated in FIG. **1(d)**, the transfer film **40** is peeled from the mold **20** to transfer the core **30** onto the transfer film **40.** Thus, the core **30** formed in a desired pattern on the transfer film **40** can be obtained.

### [Step 5]

In the step 5, as illustrated in FIG. **1(e)**, a first cladding **60** is formed so as to cover the core **30** on the transfer film **40.** Specifically, a curable composition for first cladding formation is arranged on the transfer film **40** so as to cover the core **30**, and the composition is cured to form the first cladding.

The thickness of the first cladding may be appropriately set depending on, for example, purposes. The thickness of the first cladding (thickness ranging from the upper surface to bottom surface (surface in contact with the transfer film) of the first cladding **60** in FIG. **1(e)**) may be, for example, from 2 µm to 2,000 µm.

Any appropriate curable composition may be used as the curable composition for first cladding formation as long as the first cladding can be formed through its curing by UV irradiation, heating, or the like. The curable composition for first cladding formation typically contains an uncured resin for first cladding formation, or a constituent monomer and/or oligomer of a resin for first cladding formation. The curable composition for first cladding formation may further contain any appropriate additive such as a photopolymerization initiator, a cross-linking agent, or a plasticizer as required. The resin for first cladding formation generally has a lower refractive index than the resin for core formation.

Specific examples of the resin for first cladding formation include a fluorine-based resin, an epoxy-based resin, a polyimide-based resin, a polyamide-based resin, an acrylic resin, a polyurethane-based resin, a siloxane-based resin, and fluorine-modified products thereof. They may be used alone or in combination. In one embodiment, it may be preferred to use, as the resin for first cladding formation, a resin of the same type as the resin for core formation having a lower refractive index than the resin for core formation. As used herein, the "resin of the same type" means that resins belong to the same type like, for example, fluorine-based resins or epoxy-based resins. The use of the resin of the same type can improve adhesiveness between the first cladding and the core, and hence only the transfer film can be easily peeled off in the step 6.

Any appropriate method may be used as a method of arranging the curable composition for first cladding formation on the transfer film **40**. An example thereof is a method involving dropping or applying the curable composition for first cladding formation onto the transfer film **40** so as to cover the core **30**. In addition, the following method may be adopted: the curable composition for first cladding formation is arranged on any appropriate support by dropping, applying, or the like, and then the support and the transfer film **40** are attached onto each other so that the curable composition for first cladding formation may cover the core **30**.

Curing means and curing conditions for the curable composition for first cladding formation may be appropriately set depending on, for example, the components of the composition and the concentrations of the components. As required, the curable composition for first cladding formation may be cured under a state in which a support is laminated thereon. In this case, the surface of the first cladding can be made smooth, and besides, the curing can be suitably performed. In the case of performing the curing by UV irradiation, the UV irradiation may be performed from the support side through the use of a transparent film such as a PET film as the support.

According to the manufacturing method including the steps [1] to [5], there can be obtained a polymer optical waveguide using the transfer film as a cladding.

### [Step 6]

In the step 6, as illustrated in FIG. **1(f)**, the transfer film **40** is peeled from the surface of the first cladding **60** formed in the step 5. Thus, there is obtained a buried polymer optical waveguide in which the core **30** is exposed only at the upper surface. The polymer optical waveguide of such construction can be suitably used for, for example, a sensor cell of an SPR sensor.

### [Step 7]

In the step 7, as illustrated in FIG. **1(g)**, a second cladding **70** is formed on the surfaces of the first cladding **60** and the core **30** from which the transfer film **40** has been peeled. Specifically, a curable composition for second cladding formation is arranged on the upper surface (core-exposed surface) of the first cladding **60,** and the composition is cured to form the second cladding. According to the manufacturing method including the step 1 to the step 7, the cladding can be formed with any appropriate resin without using the transfer film as the cladding, and hence there is an advantage in that the choice of materials for the transfer film is expanded.

The thickness of the second cladding may be appropriately set depending on, for example, purposes. The thickness of the second cladding may be, for example, from 2 µm to 1,000 µm.

Any appropriate curable composition may be used as the curable composition for second cladding formation as long as the second cladding can be formed through its curing by UV irradiation, heating, or the like. The curable composition for second cladding formation typically contains an uncured resin for second cladding formation, or a constituent monomer and/or oligomer of a resin for second cladding formation. The curable composition for second cladding formation may further contain any appropriate additive such as a photopolymerization initiator, a cross-linking agent, or a plasticizer as required. The resin for second cladding formation generally has a lower refractive index than the resin for core formation.

Specific examples of the resin for second cladding formation include the same resins as those given for the resin for first cladding formation. The resin for second cladding formation may be preferably a resin of the same type as the resin for core formation having a lower refractive index than the resin for core formation, and may be more preferably a resin of the same type as the resin for core formation having a refractive index comparable to that of the resin for first cladding formation.

Any appropriate method may be used as a method of arranging the curable composition for second cladding formation on the upper surface of the first cladding **60**. An example thereof is a method involving dropping or applying the curable composition for second cladding formation onto the upper surface of the first cladding **60**. In addition, the following method may be adopted: the curable composition for second cladding formation is arranged on any appropriate support by dropping, applying, or the like, and then the support and the first cladding **60** are attached onto each other so that the curable composition for second cladding formation may be brought into contact with the upper surface of the first cladding **60**.

Curing means and curing conditions for the curable composition for second cladding formation may be appropriately set depending on, for example, the components of the composition and the concentrations of the components. As required, the curable composition for second cladding formation may be cured under a state in which a support is laminated thereon. In this case, the surface of the second cladding can be made smooth, and besides, the curing can be suitably performed. In the case of performing the curing by UV irradiation, the UV irradiation may be performed from the support side through the use of a transparent film such as a PET film as the support.

### Examples

The present invention is hereinafter specifically described by way of Examples. However, the present invention is not limited by Examples. It should be noted that the measurement wavelength of a refractive index is 850 nm, unless otherwise stated.

### [Example 1]

An optical waveguide was produced by the method illustrated in FIGS. **1(a)** to **1(g)**. Specifically, a curable composition for core formation (fluorine-based UV-curing type resin, manufactured by DIC Corporation, trade name: "OP40Z", fluorine content: 52 wt%) was dropped into the recess of an aluminum mold having a recess of a shape measuring 50 µm in depth, 50 µm in width, and 200 mm in length. A polypropylene film (thickness: 45 µm) having a corona-treated surface was used as a transfer film. One end of the corona-treated surface of the transfer film was brought into abutment with the surface of the mold having arranged thereon the curable composition for core formation, and the other end was allowed to curve upward. Under this state, a roller was pressed against the abutment portion between the mold and the transfer film from the transfer film side, and the roller was rolled along a direction in which the recess extended (longitudinal direction of the core) toward the other end side under the application of a pressure (0.25 MPa), to thereby fill the recess with the curable composition for core formation and push out an excess of the curable composition for core formation and air from the recess. Thus, the mold and the transfer film were closely attached onto each other. The resultant laminate was irradiated with UV light from its transfer film side to completely cure the curable composition for core formation, to thereby form a core (refractive index: 1.40). Next, the transfer film was peeled from the mold. The surface of the transfer film after the peeling had formed thereon a core having a protrusion shape obtained by inverting the recess shape of the mold, and was found to have no residue of the resin for core formation or residual film.

Next, a curable composition for first cladding formation (fluorine-based UV-curing type resin (manufactured by Solvay Specialty Polymers Japan K.K., trade name: "Fluorolink MD700")) was applied so as to cover the core on the transfer film, and a support (PET film) was attached thereonto. UV irradiation was performed from the support side to completely cure the curable composition for first cladding formation, to thereby form a first cladding (refractive index: 1.35). Thus, there was obtained a polymer optical waveguide using the transfer film as a cladding. It should be noted that the thickness of the first cladding (thickness ranging from the upper surface to bottom surface (surface on the side brought into contact with the transfer film) of the first cladding) was 75 µm.

Only the transfer film was peeled and removed from the obtained polymer optical waveguide, to thereby obtain a buried polymer optical waveguide in which the core was exposed at the upper surface. Further, a curable composition for second cladding formation (fluorine-based UV-curing type resin (manufactured by Solvay Specialty Polymers Japan K.K., trade name: "Fluorolink MD700") ) was applied onto the surface of the polymer optical waveguide from which the transfer film had been peeled, and a support (PET film) was attached thereonto. UV irradiation was performed from the support side to completely cure the curable composition for second cladding formation, to thereby form a second cladding (refractive index: 1.35, thickness: 25 µm). Thus, a polymer optical waveguide was obtained.

### Industrial Applicability

The manufacturing method according to an embodiment of the present invention can be suitably used in the manufacture of a polymer optical waveguide such as an optical diffractive waveguide, an optical demultiplexing waveguide, an optical multiplexing waveguide, an optical switch, or an optical circuit.

### Reference Signs List

- **10**: recess corresponding to core shape

- **20**: mold
- **30**: core
- **40**: transfer film
- **50**: pressing means
- **60**: first cladding
- **70**: second cladding

## Claims

1. A manufacturing method for a polymer optical waveguide, comprising:
arranging a curable composition for core formation on a surface of a mold having a recess corresponding to a core shape;
attaching a transfer film onto the surface of the mold while pressing the transfer film in a predetermined direction to fill the recess with the curable composition for core formation and to remove an excess of the curable composition for core formation;
curing the curable composition for core formation to form a core;
peeling the transfer film from the mold to transfer the core onto the transfer film; and
forming a first cladding so as to cover the core on the transfer film.

2. A manufacturing method for a polymer optical waveguide according to claim 1, wherein the curable composition for core formation has a fluorine content of 1 wt% or more.

3. A manufacturing method for a polymer optical waveguide according to claim 1, wherein the curable composition for core formation comprises a UV-curable composition.

4. A manufacturing method for a polymer optical waveguide according to claim 1, wherein the curable composition for core formation comprises an acrylic UV-curable composition or an epoxy-based UV-curable composition.

5. A manufacturing method for a polymer optical waveguide according to claim 1, wherein the transfer film contains at least one polymer selected from the group consisting of an olefin-based polymer, a cycloolefin-based polymer, a styrene-based polymer, a polycarbonate-based polymer, an ester-based polymer, an acrylic polymer, an ether-based polymer, a polyimide-based polymer, and a polyamide-based polymer.

6. A manufacturing method for a polymer optical waveguide according to claim 5, wherein the transfer film contains at least one polymer selected from the group consisting of polypropylene, polystyrene, polyethylene terephthalate, a polycarbonate-based polymer, a cycloolefin-based polymer, and a polyimide-based polymer.

7. A manufacturing method for a polymer optical waveguide according to claim 1, wherein a surface of the transfer film on a side to be attached onto the mold has been subjected to modification treatment.

8. A manufacturing method according to claim 1, further comprising, after the forming of the first cladding, peeling the transfer film off.

9. A manufacturing method according to claim 8, further comprising forming a second cladding on surfaces of the first cladding and the core from which the transfer film has been peeled.
